# EUROPÄISCHE PATENTSCHRIFT

(11) **EP 1 618 323 B1**
(45) Veröffentlichungstag und Bekanntmachung des Hinweises auf die Patenterteilung: **09.08.2006**
(21) Anmeldenummer: 04722162.7
(22) Anmeldetag: 20.03.2004
(51) Int. Cl.: F16J 9/22, C25D 15/00

(54) **KOLBEN FÜR EINEN GROSSMOTOR SOWIE VERFAHREN ZUR HERSTELLUNG EINER VERSCHLEISSSCHUTZSCHICHT BEI EINEM DERARTIGEN KOLBEN**
PISTON FOR A LARGE-SIZE ENGINE, AND METHOD FOR THE PRODUCTION OF A WEAR-RESISTANT LAYER IN SUCH A PISTON
PISTON DESTINE A UN GROS MOTEUR ET PROCEDE DE PRODUCTION D'UNE COUCHE DE PROTECTION CONTRE L'USURE SUR CE PISTON

(30) Priorität: 28.04.2003 DE 10319141
(43) Veröffentlichungstag der Anmeldung: 25.01.2006
(73) Patentinhaber: MAN B & W Diesel A/S, 2450 Copenhagen SV (DK)
(72) Erfinder: BENZON, Michael, Eis, DK-3480 Fredensborg (DK); CARSTENSEN, Jesper, Vejlo, DK-2620 Albertslund (DK); JENSEN, Steen, Krogh, DK-3540 Lynge (DK); MOCZULSKI, Lech, DK-2650 Hvidovre (DK)
(74) Vertreter: Munk, Ludwig
(86) Internationale Anmeldenummer: PCT/EP2004/002960
(87) Internationale Veröffentlichungsnummer: WO 2004/097272

(56) Entgegenhaltungen:
- EP-A- 0 573 383
- CH-A- 375 951
- GB-A- 2 246 145

## Beschreibung

Die Erfindung betrifft gemäß einem ersten Erfindungsgedanken einen Kolben für einen Großmotor, insbesondere einen Zweitakt-Großdieselmotor, mit einer aus einem Eisenwerkstoff bestehenden Kolbenkrone, die mit umlaufenden Kolbenringnuten zur Aufnahme jeweils eines Kolbenrings versehen ist, wobei zumindest die oberste, brennraumnächste Kolbenringnut im Bereich ihrer brennraumfernen Seitenfläche mit einer Verschleißschutzschicht versehen ist.

Die Erfindung betrifft gemäß einem weiteren Erfindungsgedanken ein Verfahren zur Herstellung einer Verschleißschutzschicht bei einem derartigen Kolben, wobei die Verschleißschutzschicht im Bereich der brennraumfernen Seitenfläche der Kolbenringnut auf den Eisenwerkstoff der zugeordneten Kolbenkrone aufgebracht wird.

Bei den bekannten Anordnungen dieser Art (Siehe CH-A-375 951) ist die Verschleißschutzschicht als aus Hartchrom bestehende Plattierung ausgebildet, die in der Regel elektrogalvanisch aufgetragen wird. Diese bisher verwendete Verschleißschutzschicht erweist sich jedoch ' bei hohen Belastungen in Form hoher Drücke und hoher Temperaturen und/oder einer hohen Konzentration von abrasiven Partikeln in der Ladeluft etc. als nicht widerstandsfähig genug. Die Folge ist eine vergleichsweise kurze Lebensdauer.

Hiervon ausgehend ist es daher die Aufgabe der vorliegenden Erfindung, einen Kolben eingangs erwähnter Art mit einfachen und kostengünstigen Mitteln so zu verbessern, dass auch bei hohen Belastungen eine vergleichsweise lange Standzeit der Verschleißschutzschicht erreicht wird, sowie ein einfaches Verfahren zum Anbringen einer erfindungsgemäßen Verschleißschutzschicht bereitzustellen.

Der erste Teil der vorstehend genannten Aufgabe wird in Verbindung mit dem gattungsgemäßen Kolben dadurch gelöst, dass die Verschleißschutzschicht eine metallische Matrix aufweist, in die Tragteilchen eingebettet sind, wobei zumindest die Tragteilchen eine größere Härte als Chrom aufweisen.

Die Härte und damit die Widerstandsfähigkeit der Verschleißschutzschicht wird in erster Linie durch die Eigenschaften der Tragteilcheh beeinflusst. Da diese eine größere Härte als Chrom bzw. Chromoxyd aufweisen, ergeben die erfindungsgemäßen Maßnahmen daher auch eine gegenüber der bekannten Chrom-Schutzschicht gesteigerte Verschleißfestigkeit. Da die harten Tragteilchen in eine weichere Matrix eingebettet sind, wird dennoch eine ausreichende Duktilität der Verschleißschutzschicht gewährleistet. Dadurch, dass die Tragteilchen in eine Matrix eingebettet sind, können zur Bildung der Tragteilchen in vorteilhafter Weise auch solche Materialien Verwendung finden, die in der gewünschten Dicke nicht als Festkörper in situ herstellbar sind. Die erfindungsgemäßen Maßnahmen ermöglichen daher die Herstellung einer Verschleißschutzschicht in jeder gewünschten Dicke und mit der gewünschten hohen Tragfähigkeit, was in vorteilhafter Weise zu einer langen Lebensdauer führt.

Vorteilhafte Ausgestaltungen und zweckmäßige Fortbildungen der übergeordneten Maßnahmen sind in den Unteransprüchen angegeben. So können die Tragteilchen zweckmäßig eine abgerundete Konfiguration aufweisen. Hierdurch ist sichergestellt, dass die Tragteilchen nicht nach Art von Schleifkörnern wirken, wodurch ein unerwünschter Verschleiß des zugeordneten Kolbenrings vermieden wird. Gleichzeitig ist eine zuverlässige Abstützung und Verankerung in der Matrix gewährleistet.

Eine weitere zweckmäßige Maßnahme kann darin bestehen, dass die Tragteilchen einen Durchmesser von 20 - 60 u aufwiesen. Dies ermöglicht einen vergleichsweise hohen Anteil sowie eine homogene Verteilung der Tragteilchen. Zweckmäßig kann die Verschleißschutzschicht zu 50 Vol% aus Tragteilchen bestehen.

Eine weitere Fortbildung der übergeordneten Maßnahmen kann darin bestehen, dass die Matrix aus einer die Bestandteile Ni, Cr, B und Si enthaltenden Legierung besteht. Eine derartige Legierung ergibt in vorteilhafter Weise eine vergleichsweise große Härte der Matrix. Außerdem besitzt das genannte Material auch gute Fließeigenschaften, was eine einfache Verarbeitung im Sprühverfahren gewährleistet und die Erzielung einer gleichmäßigen Dicke der Verschleißschutzschicht erleichtert.

' Vorteilhaft können die Tragteilchen aus keramischem Material, vorzugsweise WC bestehen. Diese Maßnahmen ergeben in besonders kostengünstiger Weise sehr harte Tragteilchen.

Zweckmäßig beträgt die Dicke der Verschleißschutzschicht 0,3-0,5mm. Hierdurch wird sichergestellt, dass das Spiel in der Kolbenringnut im Laufe des Verschleißes der Verschleißschutzschicht nicht zu groß wird.

Eine weitere vorteilhafte Ausgestaltung der übergeordneten Maßnahmen kann darin bestehen, dass die Dichte der Verschleißschutzschicht von radial innen nach radial außen zunimmt. Im radial äußeren Bereich der Kolbenringnut ist die Belastung am höchsten, so dass dort auch die höchste Tragfähigkeit vorliegen muss, was mit der Zunahme der Dichte nach radial außen erreicht wird. Die genannten Maßnahmen stellen daher sicher, dass die Dichte-Verteilung über der radialen Breite der Kolbenringnut in etwa der Belastung entspricht, so dass ein vergleichsweise gleichmäßiger Verschleiß über der ganzen Breite zu erwarten ist. Hierdurch wird einem unerwünschten Verkanten des Kolbenrings vorgebeugt.

Eine weitere vorteilhafte Maßnahme kann darin bestehen, dass der Eisenwerkstoff der Kolbenkrone zumindest im der Verschleißschutzschicht benachbarten Bereich gehärtet ist. Hierdurch wird einem Einsinken der Verschleißschutzschicht in das Grundmaterial entgegengewirkt und gleichzeitig ein zu großer Härteunterschied zwischen der Verschleißschutzschicht und dem diese aufnehmenden Grundmaterial vermieden, was sich ebenfalls vorteilhaft auf die Haltbarkeit auswirkt.

Der zweite Teil der eingangs erwähnten Aufgabe wird in Verbindung mit dem gattungsgemäßen Verfahren dadurch gelöst, dass das die Verschleißschutzschicht bildende Material, das aus einer Aggregation mit einer eine Matrix bildenden, metallischen Legierung und in dieser aufgenommenen, eine größere Härte als Chrom, vorzugsweise eine größere Härte als 1600 HV, aufweisenden Tragteilchen besteht, auf die vorbereitete Seitenfläche der Kolbenringnut aufgesprüht wird, wobei die die Matrix bildende Metalllegierung in einem geschmolzenen Aggregatzustand vorliegt, und dass anschließend oder gleichzeitig eine Wärmebehandlung des aufgesprühten Materials durchgeführt wird.

Dadurch, dass das die Verschleißschutzschicht bildende Material direkt auf die zugeordnete Seitenfläche der Kolbenringnut aufgesprüht wird, wird eine gute Verbindung mit dem Grundmaterial erreicht. Die anschließende Wärmebehandlung stellt sicher, dass Dickenunterschiede, die sich aufgrund des Sprühwinkels ergeben können, zuverlässig ausgeglichen werden. Gleichzeitig wird mit Hilfe der Wärmebehandlung auch die erwünschte Härtung des Grundmaterials erreicht.

Zweckmäßig kann der Sprühwinkel über der Breite der Kolbenringnut verändert werden, wobei der Sprühwinkel im radial äußeren Bereich steiler als im radial inneren Bereich ist. Auf diese Weise wird in vorteilhafter Weise im radial äußeren Bereich die erwünschte größere Dichte erreicht.

Eine andere Lösung der genannten Aufgabe kann in Verbindung mit dem gattungsgemäßen Verfahren dadurch erreicht werden, dass das die Verschleißschutzschicht bildende Material, das aus einer Aggregation mit einer eine Matrix bildenden, metallischen Legierung und in dieser aufgenommenen, eine größere Härte als Chrom, vorzugsweise eine größere Härte als 1600 HV, aufweisenden Tragteilchen besteht, in einer mittels eines Binders gebundenen Form auf die vorbereitete Seitenfläche der Kolbenringnut aufgelegt wird und dass anschließend eine Wärmebehandlung stattfindet, bei der die die Matrix bildende Metalllegierung geschmolzen und der Binder verbrannt werden. Hierdurch werden die im Zusammenhang mit einem Sprühverfahren vorhandenen Schwierigkeiten, die insbesondere bei vergleichsweise tiefen, engen Kolbenringnuten auftreten, vermieden.

Zweckmäßig kann dabei so vorgegangen werden, dass aus dem die Verschleißschutzschicht bildenden Material unter Verwendung des Binders die Form eines Segments der ringförmigen Verschleißschutzschicht aufweisende Grünlinge erzeugt werden, die auf das Grundmaterial aufgelegt und dann der Wärmebehandlung unterzogen werden. Die Herstellung von Grünlingen erleichtert die Handhabung.

Eine weitere, in jedem Fall vorteilhafte Maßnahme kann darin bestehen, dass die Wärmebehandlung unter Zufuhr von Schutzgas durchgeführt wird. Hierdurch wird eine Oxydation insbesondere in der Verbindungszone mit dem Grundmaterial verhindert, was die Erzielung einer guten Haftung der Verschleißschutzschicht auf dem Grundmaterial gewährleistet.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: einen Ausschnitt aus einem Kolben eines Zweitakt-Großdieselmotors,
- Figur 2: eine vergrößerte Darstellung eines Ausschnitts der Verschleißschutzschicht der Anordnung gemäß Figur 1,
- Figur 3: eine vergrößerte Darstellung einer Kolbenringnut der Anordnung gemäß Figur 1 mit einer teilweise aufgesprühter Verschleißschutzschicht,
- Figur 4: eine vergrößerte Darstellung einer Kolbenringnut der Anordnung gemäß Figur 1 während der Wärmebehandlung der Verschleißschutzschicht und
- Figur 5: eine Draufsicht auf in die Kolbenringnut eingelegte, segmentförmige, Verschleißschutzschicht-Grünlinge.

Hauptanwendungsgebiet der Erfindung sind Zweitakt-Großdieselmotoren und ähnliche Großmotoren. Der grundsätzliche Aufbau und die Wirkungsweise derartiger Motoren sind an sich bekannt.

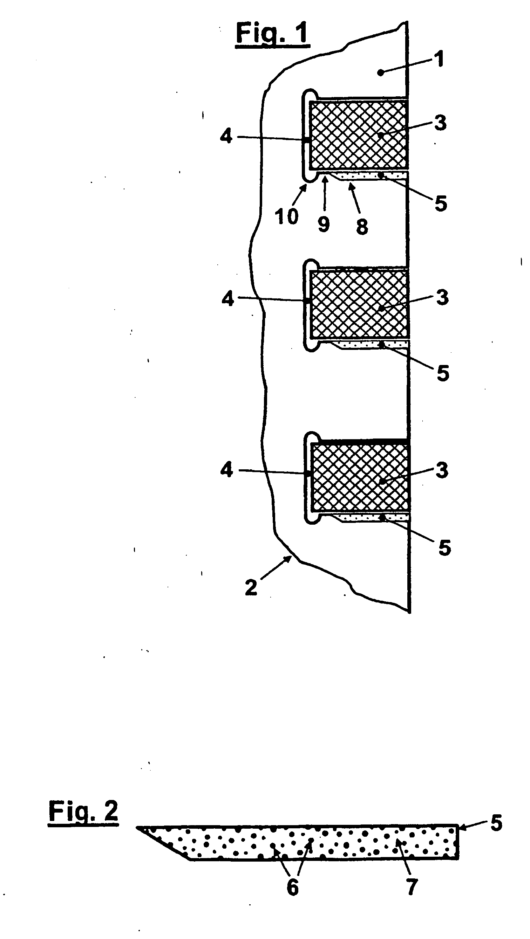

In Figur 1 ist der obere Teil, das heißt die sogenannte Kolbenkrone 1, eines Kolbens 2 eines Zweitakt-Großdieselmotors dargestellt. Bei Großmotoren hier vorliegender Art besteht die Kolbenkrone 1 aus einem Eisen-Werkstoff, wie Grauguß oder Stahlguß. Die Kolbenkrone 1 jedes Kolbens 2 ist mit einem aus mehreren, untereinander angeordneten Kolbenringen 3 bestehenden Kolbenringpaket versehen, durch das der Spalt zwischen der Mantelfläche der Kolbenkrone 1 und der Lauffläche einer den Kolben 2 aufnehmenden Laufbüchse abgedichtet wird. Die Kolbenringe 3 sind jeweils in einer zugeordneten Kolbenringnut 4 der Kolbenkrone 1 aufgenommen.

Zumindest die oberste Kolbenringnut 4, das heißt die dem vom Kolben 2 begrenzten Brennraum am nächsten liegende Kolbenringnut 4 ist im Bereich ihrer unteren, das heißt ihrer brennraumfernen Seitenfläche mit einer Verschleißschutzschicht 5 versehen, auf der der zugeordnete Kolbenring 3 aufliegt. Zweckmäßig sind mehrere, einander benachbarte, obere Kolbenringnuten 4 mit einer derartigen Verschleißschutzschicht 5 versehen. Im dargestellten Ausführungsbeispiel sind alle Kolbenringnuten 4 mit einer derartigen Verschleißschutzschicht 5 versehen.

Die Verschleißschutzshit 5 enthält, wie am besten aus der vergrößerten Darstellung in Figur 2 entnehmbar ist, eine große Härte aufweisende Tragteilchen 6, die in eine metallische Matrix 7 eingebettet sind, die mit dem durch einen Eisenwerkstoff gebildeten Grundmaterial der Kolbenkrone 1 verbunden ist. Die Härte der Tragteilchen 6 ist größer als die Härte von Chrom bzw. von an der Oberfläche von Chrom entstehendem Chromoxyd. Hierzu finden Tragteilchen 6 Verwendung, deren Härte mehr als 1600 HV beträgt. Das die Matrix 7 bildende Material besitzt eine geringere Härte als die Tragteilchen 6, was eine ausreichende Duktilität der Verschleißschutzschicht 5 gewährleistet. Ein geeignetes Material zur Bildung der Matrix 7 stellt eine Ni-Cr-Si-Fe-B-C-Legierung dar. Diese enthält zweckmäßig 74%Ni, 15%Cr 4%Si, 3,5%Fe, 3% B und 0,5% C.

Die Tragteilchen 6 bestehen zweckmäßig aus keramischem Material, was eine kostengünstige Bereitstellung ermöglicht. Mit aus WC (Wolframkarbit) bestehenden Tragteilchen 6 wurden bei Versuchen gute Ergebnisse erreicht.

Die Tragteilchen 6 besitzen zweckmäßig, wie in Figur 2 angedeutet ist, eine abgerundete bis kugelförmige Gestalt. Der Durchmesser der Tragteilchen 6 beträgt 20 -60 u. Zweckmäßig sind die Tragteilchen 6 gleichmäßig über die Matrix 7 verteilt. Der Anteil der Tragteilchen 6 an der gesamten Verschleißschutzschicht 5 kann bis zu 80 Vol% betragen. Mit einem Anteil von 50 % wurden bei Versuchen gute Ergebnisse erreicht.

Die Dicke der Verschleißschutzschicht 5 ist so bemessen, dass bei abgearbeiteter Verschleißschutzschicht 5 das zulässige Spiel zwischen Kolbenring 3 und Kolbenringnut 4 nicht überschritten wird. Zweckmäßig besitzt die Verschleißschutzschicht 5 daher eine Dicke von höchstens 1mm, vorzugsweise von 0,3 - 0,5 mm. Bei besonders großen Anordnungen liegt die genannte Dicke der Verschleißschutzschicht 5 mehr an der oberen Grenze und umgekehrt.

Die Verschleißschutzschicht 5 kann über ihrer ganzen Breite eine einheitliche Dichte aufweisen. Zweckmäßig entspricht der Verlauf der Dichte über der Breite jedoch in etwa dem Verlauf der Belastung über der Breite. Dementsprechend nimmt die Dichte von radial innen nach radial außen zu und ist im Bereich des äußeren Rands der zugeordneten Kolbenringnut 4 am höchsten. Hierdurch wird erreicht, dass sich über der Breite der Kolbenringnut ein im Wesentlichen gleichmäßiger Verschleiß ergibt, so dass der zugeordnete Kolbenring 3 nicht kippt und ein Verkanten verhindert wird.

Die Verschleißschutzschicht 5 ist, wie Figur 1 weiter erkennen lässt, als Füllung einer durch eine in das Grundmaterial der Kolbenkrone 1 eingearbeitete Abstufung 8 gebildeten Tasche ausgebildet, die nach oben offen ist und sich in radialer Richtung von einem inneren Steg 9 bis zum äußeren Rand der zugeordneten Kolbenringnut 4 erstreckt. Die der Abstufung 8 zugewandte Flanke des Stegs 9 ist schräg geneigt,, so dass die Abstufung 8 und die diese ausfüllende Verschleißschutzschicht 5 radial innen spitz auslaufen. Zwischen dem Steg 9 und der radial inneren Begrenzung der Kolbenringnut 4 ist eine umlaufende Nut 10 vorgesehen, die Kerbspannungen und Wärmebruch verhindern kann.

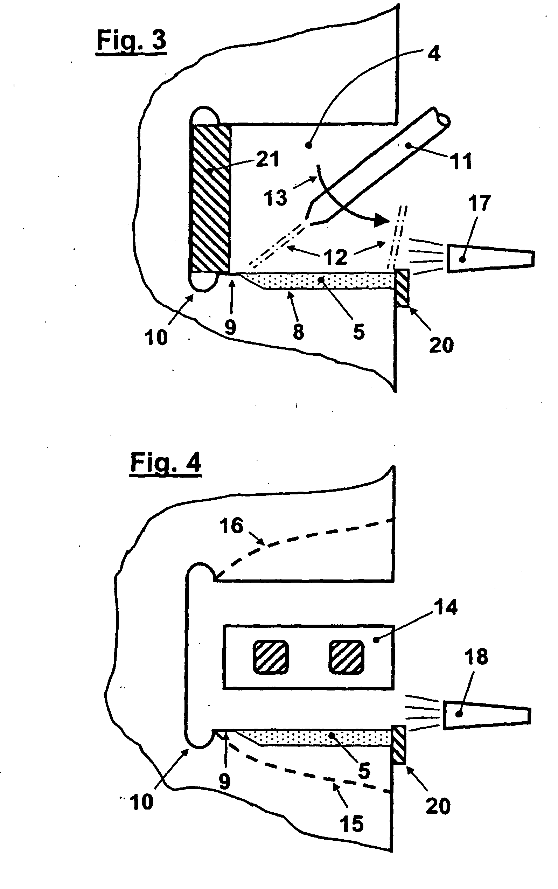

Die Verschleißschutzschicht 5 kann, wie in Figur 3 angedeutet ist, auf das Grundmaterial aufgesprüht werden, z.B. im Plasma-Sprühverfahren oder HVOF-Sprühverfahren. Hierzu findet eine in der Zeichnung durch einen Sprühkopf 11 angedeutete Sprühvorrichtung Verwendung, durch die das die Verschleißschutzschicht 5 bildende Material in die durch die Abstufung 8 gebildete Tasche hineingesprüht wird, wie durch Sprühstrahlen 12 angedeutet ist. Der Sprühwinkel kann dabei, wie in Figur 3 durch einen Schwenkpfeil 13 angedeutet ist, so variiert werden, dass im Bereich des äußeren Rands der Kolbenringnut 4 ein steilerer Sprühwinkel vorliegt, als im Bereich des inneren Rands der Verschleißschutzschicht 5. Auf diese Weise wird im Bereich des äußeren Rands der Verschleißschutzschicht 5 eine größere Dichte der Verschleißschutzschicht 5 erzielt als im Bereich des inneren Rands.

Das die Matrix 7 bildende Material liegt während des Sprühvorgangs in flüssiger, das heißt geschmolzener Form vor und verbindet sich beim Erstarren mit dem Grundmaterial. Die Tragteilchen 6 sind in das flüssige Matrix-Material eingestreut und werden mit diesem aufgesprüht. Beim Erstarren des Matrix-Materials werden die Tragteilchen in der Matrix fixiert.

Nach dem Sprühvorgang findet eine in Figur 4 angedeutete Wärmebehandlung statt. Hierzu ist im dargestellten Beispiel eine Heizeinrichtung 14 vorgesehen, die in die Kolbenringnut 4 eingeführt ist und durch die die frisch eingesprühte Verschleißschutzschicht 5 beheizbar ist. Die Heizeinrichtung 14 besteht aus wenigstens einem vergleichsweise kurzen, in die Kolbenringnut 4 eingeführten Heizsegment, das induktiv beheizbar ist, das heißt mit wenigstens einer mit elektrischem Strom beaufschlagbaren Spule versehen ist. Während der Wärmebehandlung wird die die Kolbenringnuten 4 enthaltende Kolbenkrone so rotiert, dass der ganze Umfang behandelt wird. Eine Umdrehung genügt in der Regel. Dieser Vorgang wird zweckmäßig für jede mit einer Verschleißschutzschicht 5 versehene Kolbenringnut 4 wiederholt. Es wäre aber auch denkbar, die Wärmebehandlung für mehrere oder alle mit einer Verschleißschutzschicht versehenen Kolbenringnuten 4 gleichzeitig durchzuführen. Ebenso können auch mehrere, über den Umfang verteilte Heizsegmente vorgesehen sein, wodurch sich der Umdrehungswinkel reduziert. Anstelle einer induktiv beheizbaren Heizeinrichtung könnte selbstverständlich auch eine mit einem oder mehreren Brennern versehene Heizeinrichtung oder eine Laser-Heizeinrichtung vorgesehen sein.

Die mittels der Heizeinrichtung 14 erzielbare Temperatur ist höher als die Schmelztemperatur des die Matrix 7 bildenden Materials. Im dargestellten Beispiel soll diese Temperatur 1000 bis 1200 C° betragen. Durch diese Wärmebehandlung werden leichte Dickenunterschiede, die beim Sprühvorgang nicht vermeidbar sind, ausgeglichen. Gleichzeitig erfolgt dabei eine Härtung des der Verschleißschutzschicht 5 benachbarten Bereichs 15 des Grundmaterials, wie in Figur 4 durch eine unterbrochene Linie angedeutet ist. Zweckmäßig können die Heizeinrichtung 14 so ausgebildet sein bzw. die Wärmebehandlung so durchgeführt werden, dass nicht nur im Bereich 15 an der unteren Seitenflanke der Kolbenringnut 4 eine Härtung erfolgt, sondern auch im Bereich an der oberen Seitenflanke, wie in Figur 4 ebenfalls durch eine unterbrochene Linie 16 angedeutet ist.

Im dargestellten Beispiel findet die Wärmebehandlung im Anschluss an den Sprühvorgang statt. Es wäre aber auch möglich, die Wärmebehandlung bereits während des Sprühvorgangs durchzuführen. In jedem Fall werden der Sprühvorgang und die Wärmebehandlung in einer Schutzgasatmosphäre durchgeführt, so dass keine Oxydation stattfinden kann. Das Schutzgas, beispielsweise Argon, kann durch in den Figuren 3 und 4 angedeutete, dem Sprühkopf 11 bzw. der Heizeinrichtung 14 zugeordnete Düsen 17 bzw. 18 zugeführt werden, die mit einer nicht näher dargestellten Schutzgasquelle verbunden sind.

Um beim Aufsprühen der Verschleißschutzschicht eine unerwünschte Beschichtung des Stegs 9 und der Nut 10 sowie der radial inneren Wand der Kolbenringnut 4 zu vermeiden, kann, wie Figur 3 zeigt, eine geeignete Abdeckung 21 vorgesehen sein. Dabei kann es sich um einen in die Kolbenringnut 4 eingebrachten, aus mehreren Segmenten bestehenden Ring handeln, der die gewünschte Abdeckung bewirkt. Die Abdeckung ist umfangsseitig so behandelt oder besteht aus solchem Material, z. B. Messing, dass keine Abbindung mit der Verschleißschicht 5 erfolgt. Durch die Abdeckung wird der Aufsprühvorgang stark vereinfacht.

Eine andere Möglichkeit zum Aufbringen der Verschleißschutzschicht 5 kann darin bestehen, dass das die Verschleißschutzschicht 5 bildende Material, das heißt das Matrix-Material mit darin aufgenommenen Tragteilchen 6, in einer mittels eines Bindemittels gebundenen bzw. vorgesinterten Form auf die vorbereitete, untere Seitenflanke der zugeordneten Kolbenringnut 4 aufgelegt wird und dass anschließend eine Wärmebehandlung stattfindet, bei der die die Matrix 7 bildende Metalllegierung geschmolzen und das Bindemittel verbrannt werden. Bei einem derartigen Verfahren lassen sich die Schwierigkeiten, die beim Sprühverfahren insbesondere bei sehr tiefen und engen Kolbenringnuten, wo mit vergleichsweise kleinen Sprühwinkeln gearbeitet werden müsste, zu erwarten wären, vermeiden.

Das Bindemittel kann so ausgebildet sein, dass sich zusammen mit dem die Verschleißschutzschicht 5 bildenden Material eine Paste ergibt, die auf die zugeordnete Seitenflanke einer Kolbenringnut aufgestrichen werden kann. Denkbar ist aber auch die Herstellung eines Zwischenprodukts in Form massiver, plattenförmiger oder bandförmiger Grünlinge, die in die zugeordnete Kolbenringnut 4 eingelegt werden. In jedem Fall findet anschließend eine Wärmebehandlung zum Schmelzen des Matrix-Materials und zum Verbrennen des Bindemittels statt. Dieses kann z.B. verdünnter PVA (Polyvinylalkohol), Silikon oder Latex sein.

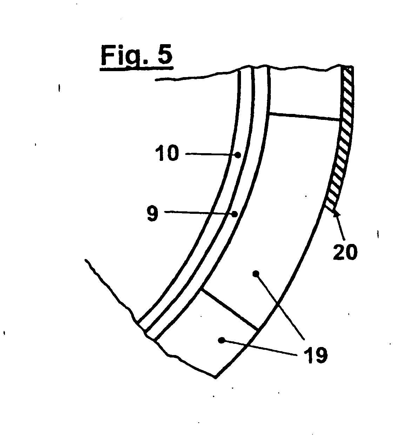

Die oben genannten Grünlinge können zweckmäßig, wie aus Figur 5 erkennbar ist, in der Form von Segmenten 19 der ringförmigen Verschleißschutzschicht 5 erzeugt werden. Aus mehreren, aneinander anstoßenden Segmenten 19 kann dementsprechend ein in die Kolbenringnut 4 eingelegter Ring gebildet werden. Der Steg 9 bildet dabei eine zuverlässige, innere Anschlagkante für die Grünlinge 19. Die radial innerhalb des Stegs 9 sich befindende Nut 10 ermöglicht in vorteilhafter Weise eine Beschränkung der Wärmebehandlung auf den Bereich der durch die Abstufung 8 gebildeten Tasche. Die Nut 10 bildet so praktisch einen unbehandelten Bereich, wodurch einem Wärmebruch vorgebeugt werden kann.

Die Wärmebehandlung kann, wie beim obigen Beispiel, mittels einer elektrischen Heizeinrichtung oder mittels einer mit Brennern versehenen Heizeinrichtung oder mittels einer Lasereinrichtung durchgeführt werden und findet zweckmäßig ebenfalls in einer Schutzgasatmosphäre statt. Die erzeugbare Temperatur muss in jedem Fall oberhalb der Schmelztemperatur des Matrix-Materials, also oberhalb von 1000 - 1200 C° liegen. Zur Gewährleistung einer guten, gleichmäßigen Verteilung des Matrix- Materials soll dieses gute Fließeigenschaften besitzen, was bei einer die Bestandteile Ni, Cr, B und Si enthaltenden Metalllegierung der Fall ist. Die Anteile der einzelnen Elemente können dem weiter oben bereits erwähnten Beispiel entsprechen. Zur Verbesserung der Fließeigenschaften kann es in manchen Fällen zweckmäßig sein, ein sogenanntes Flussmittel zuzusetzen.

Um beim Aufsprühen bzw. beim Aufschmelzen der Verschleißschutzschicht 5 ein Abtropfen des flüssigen Materials über den radial äußeren Rand der betroffenen Kolbenringnut 4 zu verhindern, kann die durch die Abstufung 8 gebildete Tasche radial außen durch ein während des Aufbringvorgangs vorgesehenes, danach, d.h. nach der Erstarrung der Verschleißschutzschicht 5, abnehmbares, um-laufendes Verschlussorgan 20 begrenzt sein, wie in den Figuren 3 - 5 angedeutet ist. Dabei kann es sich beispielsweise um einen mehreren Segmenten bestehenden Ring handeln, der auf der Innenseite so behandelt ist oder aus solchem Material besteht, dass keine Abbindung mit der Verschleißschutzschicht 5 erfolgt.

Alternativ wäre es auch denkbar, die Verschleißschutzschicht 5 durch aufgelötete Segmente zu bilden die vorher bereits aus geschmolzenem Matrix-Material und in dieses eingelagerten Tragteilchen gebildet werden.

## Patentansprüche

1. Kolben für einen Großmotor, insbesondere einen Zweitakt-Großdieselmotor, mit einer aus Eisenwerkstoff bestehenden Kolbenkrone (1), die mit umlaufenden Kolbenringnuten (4) zur Aufnahme jeweils eines Kolbenrings (3) versehen ist, wobei zumindest die oberste, brennraumnächste Kolbenringnut (4) im Bereich ihrer brennraumfernen Seitenfläche mit einer Verschleißschutzschicht (5) versehen ist, **dadurch gekennzeichnet, dass** die Verschleißschutzschicht (5) eine metallische Matrix (7) aufweist, in die Tragteilchen (6) eingebettet sind, wobei die Matrix (7) aus einer zumindest die Bestandteile Ni, Cr, B, Si enthaltenden Legierung besteht und wobei zumindest die Tragteilchen (6) eine größere Härte als Chrom aufweisen und dass die Verschleißschutzschicht (5) als Füllung einer in das Grundmaterial der Kolbenkrone (1) eingearbeiteten Abstufung (8) ausgebildet ist, die sich in radialer Richtung von einem inneren Steg (9) bis zum äußeren Rand der zugeordneten Kolbenringnut (4) erstreckt.

2. Kolben nach Anspruch 1, **dadurch gekennzeichnet, dass** die Abstufung (8) und die diese ausfüllende Verschleißschutzschicht (5) radial innen spitz auslaufen.

3. Kolben nach einem der vorhergehenden Ansprüche, **dadurch gekennzeichnet, dass** die Tragteilchen (6) eine größere Härte als 1600 HV aufweisen.

4. Kolben nach einem der vorhergehenden Ansprüche, **dadurch gekennzeichnet, dass** die Tragteilchen (6) eine abgerundete Gestalt aufweisen.

5. Kolben nach einem der vorhergehenden Ansprüche, **dadurch gekennzeichnet, dass** eine homogene Verteilung der Tragteilchen (6) in der Matrix (7) vorgesehen ist.

6. Kolben nach einem der vorhergehenden Ansprüche, **dadurch gekennzeichnet, dass** der Anteil der Tragteilchen (6) an der Verschleißschutzschicht (5) bis zu 80 Vol% beträgt.

7. Kolben nach Anspruch 6, **dadurch gekennzeichnet, dass** der Anteil der Tragteilchen (6) an der Verschleißschutzschicht (5) Vol 50 % ist.

8. Kolben nach einem der vorhergehenden Ansprüche, **dadurch gekennzeichnet, dass** die die Matrix (7) bildende Metalllegierung 74% Ni, 15% Cr, 4% Si, 3,5% Fe, 3% B und 0,5% C enthält

9. Kolben nach einem der vorhergehenden Ansprüche, **dadurch gekennzeichnet, dass** die Tragteilchen (6) aus keramischem Material bestehen.

10. Kolben nach Anspruch 9, **dadurch gekennzeichnet, dass** die Tragteilchen (6) aus Wolframkarbit (WC) bestehen.

11. Kolben nach einem der vorhergehenden Ansprüche, **dadurch gekennzeichnet, dass** die Dicke der Verschleißschutzschicht (5) bis zu 1 mm beträgt.

12. Kolben nach Anspruch 11, **dadurch gekennzeichnet, dass** die Dicke der Verschleißschutzschicht (5) 0,3 - 0,5 mm beträgt.

13. Kolben nach einem der vorhergehenden Ansprüche, **dadurch gekennzeichnet, dass** die Dichte der Verschleißschutzschicht (5) von radial innen nach radial außen zunimmt.

14. Kolben nach einem der vorhergehenden Ansprüche, **dadurch gekennzeichnet, dass** das die Verschleißschutzschicht (5) aufnehmende Grundmaterial zumindest im der Verschleißschutzschicht (5) benachbarten Bereich (15) gehärtet ist.

15. Kolben nach einem der vorhergehenden Ansprüche, **dadurch gekennzeichnet, dass** das Grundmaterial im Bereich beider Seitenflanken der Kolbenringnut (4) einen gehärteten Bereich (15, 16) aufweist.

16. Kolben nach Anspruch 14 oder 15, **dadurch gekennzeichnet, dass** das Grundmaterial im Bereich der radial inneren Fläche der Kolbenringnut (4) ungehärtet ist.

17. Kolben nach einem der vorhergehenden Ansprüche, **dadurch gekennzeichnet, dass** der Steg (9) durch eine umlaufende Nut (10) von der radial inneren Fläche der Kolbenringnut (4) getrennt ist.

18. Kolben nach einem der vorhergehenden Ansprüche, **dadurch gekennzeichnet, dass** mehrere, obere Kolbenringnuten (4) eines Kolbenringpaketes mit einer Verschleißschutzschicht (5) versehen sind.

19. Kolben nach Anspruch 18, **dadurch gekennzeichnet, dass** alle Kolbenringnuten (4) mit einer Verschleißschutzschicht (5) versehen sind.

20. Verfahren zur Herstellung einer Verschleißschutzschicht bei einem Kolben nach einem der vorhergehenden Ansprüche, wobei die Verschleißschutzschicht (5) im Bereich der brennraumfernen Seitenfläche der zugeordneten Kolbenringnut (4) auf den Eisenwerkstoff der Kolbenkrone (1) aufgebracht wird, **dadurch gekennzeichnet, dass** das die Verschleißschutzschicht (5) bildende Material, das aus einer eine Matrix (7) bildenden, metallischen Legierung und aus in dieser aufgenommenen, eine größere Härte als Chrom aufweisenden Tragteilchen (6) besteht, auf die vorbereitete Seitenfläche der Kolbenringnut (4) aufgesprüht wird, wobei die die Matrix (7) bildende Metalllegierung in einem geschmolzenen Aggregatzustand vorliegt, und dass anschließend oder gleichzeitig eine Wärmebehandlung des aufgesprühten Materials durchgeführt wird.

21. Verfahren nach Anspruch 20, **dadurch gekennzeichnet, dass** der Sprühwinkel über der Breite der Verschleißschutzschicht (5) verändert wird, wobei der Sprühwinkel im radial äußeren Bereich steiler als im radial inneren Bereich ist.

22. Verfahren nach einem der vorhergehenden Ansprüche 20 oder 21, **dadurch gekennzeichnet, dass** die dem radial inneren Rand der Verschleißschutzschicht (5) benachbarten Bereiche der Kolbenringnut (4) während des Sprühvorgangs mittels einer Abdeckung (21) abgedeckt werden.

23. Verfahren zur Herstellung einer Verschleißschutzschicht bei einem Kolben nach einem der vorhergehenden Ansprüche 1- 20, wobei die Verschleißschutzschicht (5) im Bereich der brennraumfernen Seitenfläche der zugeordneten Kolbenringnut (4) auf den Eisenwerkstoff der Kolbenkrone (1) aufgebracht wird, **dadurch gekennzeichnet, dass** das die Verschleißschutzschicht (5) bildende Material, das aus einer eine Matrix (7) bildenden metallischen Legierung und aus in dieser aufgenommenen, eine größere Härte als Chrom aufweisenden Tragteilchen (6) besteht, in einer mittels eines Bindemittels gebundenen Form auf die vorbereitete Seitenfläche der Kolbenringnut (4) aufgelegt wird und dass anschließend eine Wärmebehandlung stattfindet, bei der die die Matrix (7) bildende Metalllegierung geschmolzen und das Bindemittel verbrannt werden.

24. Verfahren nach Anspruch 23, **dadurch gekennzeichnet, dass** aus dem die Verschleißschutzschicht (5) bildenden Material unter Verwendung des Bindemittels die Form jeweils eines Segments (19) der ringförmigen Verschleißschutzschicht (5) aufweisende Grünlinge erzeugt werden, die auf die zugeordnete Seitenfläche der Kolbenringnut (4) aufgelegt und dann der Wärmebehandlung unterzogen werden.

25. Verfahren nach einem der vorhergehenden Ansprüche 20 - 24, **dadurch gekennzeichnet, dass** die Wärmebehandlung unter Zufuhr von Schutzgas durchgeführt wird.

26. Verfahren nach einem der vorhergehenden Ansprüche 20 - 25, **dadurch gekennzeichnet, dass** die Wärmebehandlung bei einer Temperatur oberhalb der Schmelztemperatur des die Matrix (7) bildenden Materials durchgeführt wird.

27. Verfahren nach einem der vorhergehenden Ansprüche 20 - 26, **dadurch gekennzeichnet, dass** die Wärmebehandlung unter Verwendung eines induktiv beheizbaren Heizeinrichtung (14) erfolgt, die sich über einen Teil des Umfangs der Kolbenringnut (4) erstreckt und an der die Verschleißschutzschicht (5) durch Drehen der Kolbenkrone (1) vorbeibewegt wird.

28. Verfahren nach einem der vorhergehenden Ansprüche 20 - 26, **dadurch gekennzeichnet, dass** die Wärmebehandlung unter Verwendung wenigstens eines Brenners und/oder Lasereinrichtung erfolgt.

29. Verfahren nach einem der vorhergehenden Ansprüche 20 - 28, **dadurch gekennzeichnet, dass** die Verschleißschutzschicht (5) in eine in das Grundmaterial eingearbeitete Abstufung (8) eingebracht wird.

30. Verfahren nach Anspruch 29, **dadurch gekennzeichnet, dass** die Abstufung (8) bis zur Erstarrung der Verschleißschutzschicht (5) radial außen durch einen umlaufenden Ring (20) begrenzt wird.

## Claims

1. A piston for a large-size engine, especially a two-stroke large-size diesel engine, comprising a piston crown (1) which is provided with circular piston ring grooves (4) for receiving a piston ring (3) each, with at least the uppermost piston ring groove (4) closest to the combustion chamber being provided in the region of its side surface remote from the combustion chamber with a wear-resistant layer (5), **characterized in that** the wear-resistant layer (5) comprises a metallic matrix (7) in which supporting particles (6) are embedded, with the matrix (7) consisting of an alloy containing at least the components Ni, Cr, B, Si and with at least the supporting particles (6) having a higher hardness than chromium, and that the wear-resistant layer (5) is arranged as a filling of a graduation (8) incorporated into the base material of the piston crown (1), which graduation extends in the radial direction from an inner set-off (9) up to the outer edge of the associated piston ring groove (4).

2. A piston according to claim 1, **characterized in that** the graduation (8) and the wear-resistant layer (5) filling the same taper radially to the inside.

3. A piston according to one of the preceding claims, **characterized in that** the supporting particles (6) have a higher hardness than 1600 HV.

4. A piston according to one of the preceding claims, **characterized in that** the supporting particles (6) have a rounded shape.

5. A piston according to one of the preceding claims, **characterized in that** a homogeneous distribution of the supporting particles (6) in the matrix is provided.

6. A piston according to one of the preceding claims, **characterized in that** the share of the supporting particles (6) in the wear-resistant layer (5) is up to 80% by volume.

7. A piston according to claim 6, **characterized in that** the share of the supporting particles (6) in the wear-resistant layer (5) is 50% by volume.

8. A piston according to one of the preceding claims, **characterized in that** the metal alloy forming the matrix (7) contains 74% Ni, 15% Cr, 4% Si, 3.5% Fe, 3% B and 0.5% C.

9. A piston according to one of the preceding claims, **characterized in that** the supporting particles (6) consist of ceramic material.

10. A piston according to claim 9, **characterized in that** the supporting particles (6) consist of tungsten carbide (WC).

11. A piston according to one of the preceding claims, **characterized in that** the thickness of the wear-resistant layer (5) is up to 1 mm.

12. A piston according to claim 11, **characterized in that** the thickness of the wear-resistant layer (5) is 0.3 to 0.5 mm.

13. A piston according to one of the preceding claims, **characterized in that** the density of the wear-resistant layer (5) increases from the radially inside to radially outside.

14. A piston according to one of the preceding claims, **characterized in that** the base material receiving the wear-resistant layer (5) is hardened at least in the region (15) adjacent to the wear-resistant layer (5).

15. A piston according to one of the preceding claims, **characterized in that** the base material comprises a hardened region (15, 16) in the area of the two lateral flanks of the piston ring groove (4).

16. A piston according to claim 14 or 15, **characterized in that** the base material is non-hardened in the area of the radial inner surface of the piston ring groove (4).

17. A piston according to one of the preceding claims, **characterized in that** the set-off (9) is separated by a circular groove (10) from the radial inner surface of the piston ring groove (4).

18. A piston according to one of the preceding claims, **characterized in that** several upper piston ring grooves (4) of a piston ring package are provided with a wear-resistant layer (5).

19. A piston according to claim 18, **characterized in that** all piston ring grooves (4) are provided with a wear-resistant layer (5).

20. A method for producing a wear-resistant layer in a piston in accordance with one of the preceding claims, with the wear-resistant layer (5) being applied onto the iron material of the piston crown (1) in the region of the side surface of the associated piston ring groove (4), which side surface is remote from the combustion chamber, **characterized in that** the material forming the wear-resistant layer (5), which consists of a metallic alloy forming a matrix (7) and of supporting particles (6) which are received by the same and have a higher hardness than chromium, is sprayed onto the prepared side surface of the piston ring groove (4), with the metal alloy forming the matrix (7) being present in a molten aggregate state, and that thereafter or simultaneously a heat treatment of the sprayed material is carried out.

21. A method according to claim 20, **characterized in that** the spray angle is changed over the width of the wear-resistant layer (5), with the spray angle being steeper in the radial outer region than in the radial inner region.

22. A method according to one of the preceding claims 20 or 21, **characterized in that** the regions of the piston ring groove (4) which are adjacent to the radial inside edge of the wear-resistant layer (5) are covered during the spraying process by means of a cover (21).

23. A method for producing a wear-resistant layer in a piston according to one of the preceding claims 1 to 20, with the wear-resistant layer (5) being applied onto the iron material of the piston crown in the region of the side surface of the associated piston ring groove (4), which side surface is remote from the combustion chamber, **characterized in that** the material forming the wear-resistant layer (5) which consists of a metallic alloy forming a matrix (7) and of supporting particles (6) which are received by the same and have a higher hardness than chromium, is placed onto the prepared side surfaces of the piston ring groove (4) by means of a mold bound by means of a bonding agent, and that thereafter a heat treatment is performed in which the metal alloy forming the matrix (7) is molten and the bonding agents are incinerated.

24. A method according to claim 23, **characterized in that** from the material forming the wear-resistant layer (5) the mold of a segment (19) each of the green compacts having the annular wear-resistant layer (5) are produced by using the bonding agent, which green compacts are placed on the associated side surface of the piston ring groove (4) and are then subjected to the heat treatment.

25. A method according to one of the preceding claims 20 to 24, **characterized in that** the heat treatment is carried out under the supply of protective gas.

26. A method according to one of the preceding claims 20 to 25, **characterized in that** the heat treatment is carried out at a temperature above the melting temperature of the material forming the matrix (7).

27. A method according to one of the preceding claims 20 to 26, **characterized in that** the heat treatment is carried out by using an inductively heatable heating device (14) which extends over a part of the circumference of the piston ring groove (4) and past which the wear-resistant layer (5) is moved by turning the piston crown (1).

28. A method according to one of the preceding claims 20 to 26, **characterized in that** the heat treatment is carried out by using at least one burner and/or laser device.

29. A method according to one of the preceding claims 20 to 28, **characterized in that** the wear-resistant layer (5) is introduced into a graduation (8) incorporated in the base material.

30. A method according to claim 29, **characterized in that** the graduation (8) is delimited radially to the outside by a circumferential ring (20) until the solidification of the wear-resistant layer (5).

## Revendications

1. Piston pour un gros moteur, en particulier un gros moteur diesel deux temps, avec une couronne de piston (1) faite d'un matériau ferreux, dotée de gorges pour segment de piston (4) circulaires destinées à recevoir chacune un segment de piston (3), la gorge pour segment de piston (4) la plus haute et la plus proche de la chambre de combustion, au minimum, étant dotée d'une couche de protection contre l'usure (5) au niveau de sa surface latérale éloignée de la chambre de combustion, **caractérisé en ce que** la couche de protection contre l'usure (5) comporte une matrice métallique (7) dans laquelle sont incluses des particules portantes (6), la matrice (7) se composant d'un alliage contenant au moins les éléments Ni, Cr, B, Si et les particules portantes (6) au moins ayant une dureté supérieure à celle du chrome, et **en ce que** la couche de protection contre l'usure (5) est conformée comme un remplissage d'un décrochement (8) formé dans le matériau de base de la couronne de piston (1), qui s'étend dans le sens radial d'une barrette intérieure (9) au bord extérieur de la gorge pour segment de piston (4) correspondante.

2. Piston selon la revendication 1, **caractérisé en ce que** le décrochement (8) et la couche de protection contre l'usure (5) qui le remplit sont obliques à angle aigu vers l'intérieur dans le sens radial.

3. Piston selon l'une quelconque des revendications précédentes, **caractérisé en ce que** les particules portantes (6) ont une dureté supérieure à 1600 HV.

4. Piston selon l'une quelconque des revendications précédentes, **caractérisé en ce que** les particules portantes (6) ont une forme arrondie.

5. Piston selon l'une quelconque des revendications précédentes, **caractérisé en ce qu'**il est prévu une répartition homogène des particules portantes (6) dans la matrice (7).

6. Piston selon l'une quelconque des revendications précédentes, **caractérisé en ce que** la proportion des particules portantes (6) sur la couche de protection contre l'usure (5) peut aller jusqu'à 80 % du volume.

7. Piston selon la revendication 6, **caractérisé en ce que** la proportion des particules portantes (6) sur la couche de protection contre l'usure (5) est de 50 % du volume.

8. Piston selon l'une quelconque des revendications précédentes, **caractérisé en ce que** l'alliage métallique formant la matrice (7) contient 74 % de Ni, 15 % de Cr, 4 % de Si, 3,5 % de Fe, 3 % de B et 0,5 % de C

9. Piston selon l'une quelconque des revendications précédentes, **caractérisé en ce que** les particules portantes (6) se composent de matériau céramique.

10. Piston selon la revendication 9, **caractérisé en ce que** les particules portantes (6) se composent de carbure de tungstène (CT).

11. Piston selon l'une quelconque des revendications précédentes, **caractérisé en ce que** l'épaisseur de la couche de protection contre l'usure (5) peut aller jusqu'à 1 mm.

12. Piston selon la revendication 11, **caractérisé en ce que** l'épaisseur de la couche de protection contre l'usure (5) est de 0,3 à 0,5 mm.

13. Piston selon l'une quelconque des revendications précédentes, **caractérisé en ce que** la densité de la couche de protection contre l'usure (5) diminue de l'intérieur vers l'extérieur dans le sens radial.

14. Piston selon l'une quelconque des revendications précédentes, **caractérisé en ce que** le métal de base contenant la couche de protection contre l'usure (5) est durci au moins dans la zone (15) contiguë à la couche de protection contre l'usure (5).

15. Piston selon l'une quelconque des revendications précédentes, **caractérisé en ce que** le matériau de base contient, au niveau des deux flancs latéraux de la gorge pour segment de piston (4), une zone durcie (15, 16).

16. Piston selon la revendication 14 ou 15, **caractérisé en ce que** le matériau n'est pas durci au niveau de la surface intérieure dans le sens radial de la gorge pour segment de piston (4).

17. Piston selon l'une quelconque des revendications précédentes, **caractérisé en ce que** la barrette (9) est séparée de la surface intérieure dans le sens radial de la gorge pour segment de piston (4) par une gorge (10) continue.

18. Piston selon l'une quelconque des revendications précédentes, **caractérisé en ce que** plusieurs gorges pour segment de piston (4) supérieures d'un paquet de segments de piston sont pourvues d'une couche de protection contre l'usure (5).

19. Piston selon la revendication 18, **caractérisé en ce que** toutes les gorges pour segment de piston (4) sont dotées d'une couche de protection contre l'usure (5).

20. Procédé pour la fabrication d'une couche de protection contre l'usure dans un piston selon l'une quelconque des revendications précédentes, dans lequel la couche de protection contre l'usure (5) est appliquée sur le matériau ferreux de la couronne de piston (1) au niveau de la surface latérale éloignée de la chambre de combustion de la gorge pour segment de piston (4) correspondante, **caractérisé en ce que** le matériau formant la couche de protection contre l'usure (5), qui se compose d'un alliage métallique formant une matrice (7) et de particules portantes (6) incluses dans celle-ci et ayant une plus grande dureté que le chrome, est projeté sur la surface latérale préparée de la gorge pour segment de piston (4), l'alliage métallique formant la matrice (7) se présentant sous la forme d'un agrégat en fusion, et **en ce qu'**un traitement thermique du matériau projeté est réalisé ensuite ou simultanément.

21. Procédé selon la revendication 20, **caractérisé en ce que** l'angle de projection change sur la largeur de la couche de protection contre l'usure (5), l'angle de projection étant plus aigu au niveau de la zone extérieure dans le sens radial que dans la zone intérieure dans le sens radial.

22. Procédé selon l'une quelconque des revendications 20 ou 21, **caractérisé en ce que** les zones de la gorge pour segment de piston (4) contiguës au bord de la couche intérieur dans le sens radial de protection contre l'usure (5) sont couvertes au moyen d'un cache (21) pendant l'opération de projection.

23. Procédé pour la fabrication d'une couche de protection contre l'usure dans un piston selon l'une quelconque des revendications 1 à 20, dans lequel la couche de protection contre l'usure (5) est appliquée sur le matériau ferreux de la couronne de piston (1) au niveau de la surface latérale éloignée de la chambre de combustion de la gorge pour segment de piston (4) correspondante, **caractérisé en ce que** le matériau formant la couche de protection contre l'usure (5), qui se compose d'un alliage métallique formant une matrice (7) et de particules portantes (6) incluses dans celui-ci et ayant une plus grande dureté que le chrome, est déposé sous une forme liée au moyen d'un liant sur la surface latérale préparée de la gorge pour segment de piston (4) et un traitement thermique est ensuite réalisé, au cours duquel l'alliage métallique formant la matrice (7) est fondu et le liant est brûlé.

24. Procédé selon la revendication 23, **caractérisé en ce que** des ébauches ayant chacune la forme d'un segment (19) de la couche de protection contre l'usure (5) annulaire sont produites avec le matériau formant la couche de protection contre l'usure (5) en utilisant le liant, posées sur la surface latérale correspondante de la gorge pour segment de piston (4) puis soumises au traitement thermique.

25. Procédé selon l'une quelconque des revendications 20 à 24, **caractérisé en ce que** le traitement thermique est exécuté sous apport de gaz protecteur.

26. Procédé selon l'une quelconque des revendications 20 à 25, **caractérisé en ce que** le traitement thermique est effectué à une température supérieure à la température de fusion du matériau composant la matricé (7).

27. Procédé selon l'une quelconque des revendications 20 à 26, **caractérisé en ce que** le traitement thermique est effectué à l'aide d'un dispositif de chauffage par induction (14) qui s'étend sur une partie de la circonférence de la gorge pour segment de piston (4) et qui est déplacé devant la couche de protection contre l'usure (5) par la rotation de la couronne de piston (1).

28. Procédé selon l'une quelconque des revendications 20 à 26, **caractérisé en ce que** le traitement thermique est réalisé au moyen d'au moins un brûleur et/ou d'un laser.

29. Procédé selon l'une quelconque des revendications 20 à 28, **caractérisé en ce que** la couche de protection contre l'usure (5) est introduite dans un décrochement (8) formé dans le matériau de base.

30. Procédé selon la revendication 29, **caractérisé en ce que** le décrochement (8) est délimité vers l'extérieur dans le sens radial par une bague circulaire (20) jusqu'à ce que la couche de protection contre l'usure (5) soit solidifiée.
